# FASCICULE DE BREVET EUROPEEN

(11) **EP 3 402 702 B1**
(45) Date de publication et mention de la délivrance du brevet: **29.01.2020**
(21) Numéro de dépôt: 16812949.2
(22) Date de dépôt: 15.12.2016
(51) Int. Cl.: B60S 1/38

(54) **DÉFLECTEUR ET BALAI D'ESSUIE-GLACE DE VÉHICULE AUTOMOBILE**
DEFLEKTOR UND WISCHERBLATT FÜR EIN KRAFTFAHRZEUG
DEFLECTOR AND WIPER BLADE FOR A MOTOR VEHICLE

(30) Priorité: 12.01.2016 FR 1650232
(43) Date de publication de la demande: 21.11.2018
(73) Titulaire: Valeo Systèmes d'Essuyage, 78322 Le Mesnil Saint Denis (FR)
(72) Inventeur: GIRONDE, Yvan, 63500 Issoire (FR)
(74) Mandataire: Valeo Systèmes d'Essuyage
(86) Numéro de dépôt international: PCT/EP2016/081315
(87) Numéro de publication internationale: WO 2017/121574

(56) Documents cités:
- DE-A1- 10 111 757
- DE-A1-102013 202 036
- FR-A1- 2 967 116

## Description

L'invention concerne un déflecteur pour balai d'essuie-glace de véhicule automobile. L'invention concerne également un balai d'essuie-glace de véhicule automobile comprenant ledit déflecteur.

Les balais d'essuie-glaces dénommés "flat blade" (pour "lame plate"), sont formés d'un ensemble semi-rigide qui maintient la lame racleuse sur toute sa longueur.

Ils comportent généralement une ou plusieurs vertèbres de rigidification en métal ou en polymère dur pour donner un cintrage intrinsèque au balai. Ils comportent également un déflecteur qui présente un profil aérodynamique conformé pour que le vent relatif qui est produit par le déplacement du véhicule, produise un effort tendant à plaquer le balai d'essuie-glace sur le panneau vitré.

Le déflecteur présente généralement une base élargie terminée par une pointe étroite, déportée sur un côté de la base. Ce profil asymétrique permet d'optimiser la surface d'appui pour le flux d'air incident.

Le document DE 10 2013 202 036 A1 divulgue un déflecteur selon le préambule de la revendication 1.

Un but de la présente invention est d'augmenter la surface de déflexion du déflecteur au moins sous l'effet d'un flux d'air incident. Un autre but de la présente invention est de simplifier les lignes de montage du balai d'essuie-glace sur le véhicule en cours de fabrication.

A cet effet, la présente invention a pour objet un déflecteur pour balai d'essuie-glace de véhicule automobile, en matériau souple caractérisé en ce qu'il est fendu longitudinalement par une fente communiquant avec une cavité longitudinale du déflecteur de manière à former deux demi-ailerons pouvant prendre une position déformée dans laquelle les demi-ailerons déformés augmentent la surface de déflexion du déflecteur.

La cavité longitudinale permet de conférer la souplesse nécessaire aux demi-ailerons pour qu'ils puissent se déformer élastiquement sous l'effet du flux d'air incident. Ainsi, lorsque le véhicule se déplace, le vent relatif qui est produit par le déplacement du véhicule déforme les demi-ailerons du déflecteur. Les demi-ailerons s'inclinent dans le sens du flux d'air incident, de sorte que la surface d'appui du déflecteur déviant l'air incident, également appelée surface de déflexion, soit augmentée d'une portion découverte de demi-aileron. Le sommet du déflecteur déformé s'inscrit dans une forme aérodynamique asymétrique dans laquelle la surface d'appui déviant l'air incident lors du déplacement du véhicule est augmentée par rapport à la surface d'appui de l'air incident du déflecteur en position de repos. L'augmentation relative de la surface de déflexion du déflecteur permet d'améliorer sensiblement le plaquage du balai sur le panneau vitré et donc l'efficacité du déflecteur.

Un déflecteur creux est en outre plus facile à extruder et moins cher à réaliser puisqu'il présente moins de matériau.

La surface de déflexion en position déformée peut être au moins augmentée de 5%.

Selon un exemple de réalisation, les demi-ailerons peuvent prendre une position de repos dans laquelle ils se font face de manière symétrique.

Un déflecteur symétrique en position de repos permet en plus d'éviter d'avoir à tenir compte d'un sens pour l'agencement du déflecteur sur le véhicule puisque le flux d'air incident déformera le déflecteur pareillement dans les deux sens. On simplifie ainsi les lignes de montage car le déflecteur symétrique peut être positionné dans un sens ou dans l'autre. Egalement, un même déflecteur symétrique peut être utilisé côté conducteur et côté passager pour les systèmes d'essuyage papillon. On réduit ainsi de manière importante le nombre de références.

Selon une ou plusieurs caractéristiques du déflecteur, prise seule ou en combinaison,
- en position de repos, la section transversale de la cavité longitudinale présente une forme de gouttelette,
- en position de repos, le sommet du déflecteur s'inscrit dans un triangle isocèle,
- en position de repos, le sommet du déflecteur s'étend par une pointe verticale,
- en position déformée, une extrémité d'un demi-aileron appuie sur l'autre demi-aileron,
- le déflecteur comporte un élément de fixation pour fixer le déflecteur à une lame d'essuyage ou à au moins une vertèbre de rigidification,
- le déflecteur est formé d'une seule pièce avec une lame d'essuyage de balai d'essuie-glace,
- le déflecteur comporte deux rainures latérales longitudinales destinées à recevoir une vertèbre de rigidification respective,
- le déflecteur comporte deux premiers crochets en vis-à-vis pour recevoir une vertèbre de rigidification,
- le déflecteur est obtenu par moulage ou extrusion d'un ou de plusieurs matériaux.

L'invention a aussi pour objet un balai d'essuie-glace caractérisé en ce qu'il comporte un déflecteur tel que décrit précédemment.

D'autres caractéristiques et avantages de l'invention ressortiront de la description suivante, donnée à titre d'exemple, sans caractère limitatif, en regard des figures annexées sur lesquelles :
- La figure 1 est une représentation schématique en perspective d'un balai d'essuie-glace selon un premier mode de réalisation,
- La figure 2 montre une section en coupe transversale du balai d'essuie-glace de la figure 1, dont le déflecteur est en position de repos,
- La figure 3 est une vue similaire à la figure 2 avec le déflecteur en position déformée,
- La figure 4 montre une section en coupe transversale d'un balai d'essuie-glace selon un deuxième mode de réalisation, dont le déflecteur est en position de repos, et
- La figure 5 est une vue similaire à la figure 4 avec le déflecteur en position déformée.

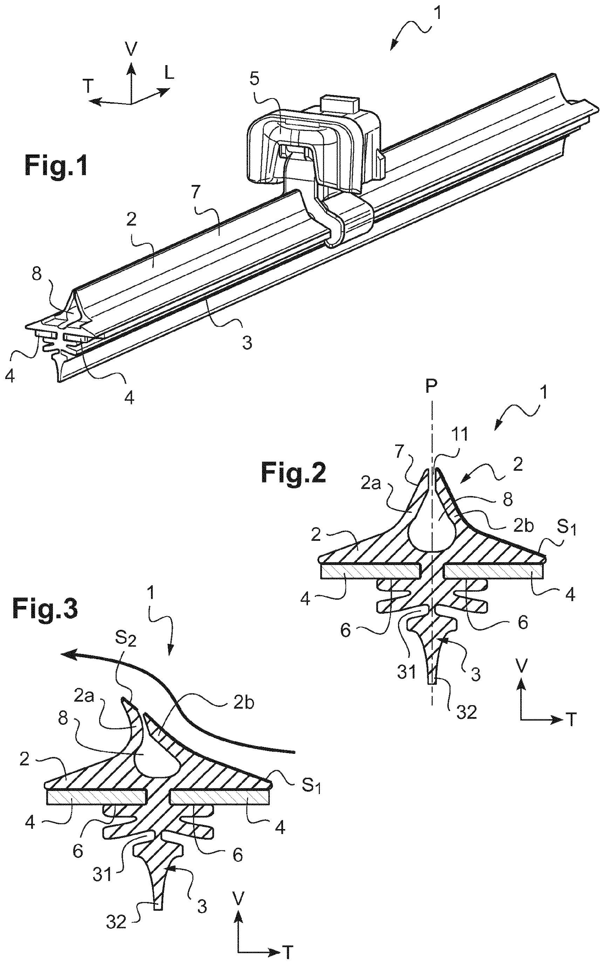

Dans la suite de la description, on adoptera à titre non limitatif des directions longitudinale, verticale et transversale indiquées sur la figure 1 par le trièdre (L, V, T) fixe par rapport au balai d'essuie-glace 1. La direction longitudinale L correspond à la direction principale du balai d'essuie-glace. Dans la description qui va suivre, des éléments identiques ou similaires seront désignés par les mêmes chiffres de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

On a représenté sur la figure 1 un balai d'essuie-glace 1 de véhicule automobile. Le balai d'essuie-glace 1 est un balai du type "flat blade", d'orientation principale longitudinale L.

Le balai d'essuie-glace 1 comporte un déflecteur 2 (ou spoiler), une lame d'essuyage 3 et deux vertèbres de rigidification 4 (appelées « spline » en anglais).

Le déflecteur 2 et la lame d'essuyage 3 sont en matériau souple.

Le déflecteur 2 peut être obtenu par moulage ou extrusion d'un ou de plusieurs matériaux.

Dans ce premier mode de réalisation, le déflecteur 2 et la lame d'essuyage 3 sont réalisés en une seule pièce. Ils peuvent également être formés par un ou plusieurs matériaux. Le déflecteur 2 et la lame d'essuyage 3 réalisés en une seule pièce peuvent également être obtenus par moulage ou par extrusion d'un ou de plusieurs matériaux.

Le balai d'essuie-glace 1 comporte également un connecteur 5 de montage et d'articulation du balai d'essuie-glace 1 sur l'extrémité libre d'un bras d'entraînement. Dans cet exemple, le déflecteur 2 est formé d'un seul élément longitudinal sur lequel est monté le connecteur 5 mais il peut également comporter deux éléments agencés de part et d'autre du connecteur 5.

Mieux visible sur la figure 2, la lame d'essuyage 3 présente un rétrécissement longitudinal 31 lui permettant de pivoter par rapport à l'axe longitudinal L à chaque changement de sens lorsque le balai 1 est actionné contre la surface vitrée. L'extrémité 32 fine et libre de la lame d'essuyage 3 est destinée à être en contact avec la surface vitrée à essuyer.

Le déflecteur 2 et la lame d'essuyage 3 en une seule pièce se rejoignent en formant deux rainures latérales longitudinales 6. Chaque rainure latérale longitudinale 6 reçoit une vertèbre de rigidification 4 respective.

La vertèbre de rigidification 4 est formée d'un corps en un seul tenant, comprenant par exemple une bande métallique plane qui est notamment cintrée verticalement, de manière que lorsque le balai d'essuie-glace 1 est en appui sur le panneau vitré, les efforts d'appui exercés par le bras d'entraînement soient répartis sur toute la longueur de la lame d'essuyage 3.

Des canaux de circulation d'un fluide lave-glace débouchant par des orifices d'arrosage peuvent en outre être rapportés sur le déflecteur 2 ou ménagés dans le corps du déflecteur 2 (non représentés).

Le déflecteur 2 est fendu longitudinalement par une fente 11 communiquant avec une cavité longitudinale 8 du déflecteur 2 de manière à former deux demi-ailerons 2a, 2b, longitudinaux. Les demi-ailerons 2a, 2b du déflecteur 2 peuvent être réalisés dans des matériaux identiques ou différents.

Les demi-ailerons 2a, 2b peuvent prendre une position de repos (figure 2) ou une position déformée (figure 3), dans laquelle les demi-ailerons 2a, 2b déformés sous l'effet du vent produit par le déplacement du véhicule, augmentent la surface de déflexion du déflecteur 2.

Le déflecteur 2 est fendu au sommet 7 de manière à ouvrir le haut de la cavité longitudinale 8. La cavité longitudinale 8 ouverte permet de conférer la souplesse nécessaire aux demi-ailerons 2a, 2b pour qu'ils puissent se déformer élastiquement sous l'effet du flux d'air incident. De plus, un déflecteur 2 creux est plus facile à extruder et moins cher à réaliser puisqu'il présente moins de matériau.

Dans cet exemple de réalisation, la lame d'essuyage 3 et le déflecteur 2 présentent un plan de symétrie longitudinale P au repos (figure 2). Le déflecteur 2 est fendu selon le plan de symétrie longitudinale P du balai 1 de sorte que dans la position de repos, les demi-ailerons 2a, 2b sont symétriques et se font face de manière symétrique.

Le sommet 7 du déflecteur 2 s'inscrit ainsi par exemple dans une section transversale de forme symétrique, telle qu'un triangle isocèle.

La section transversale de la cavité longitudinale 8 présente ainsi également une forme symétrique, telle qu'une forme de gouttelette (figure 2), ou n'importe quelle autre forme symétrique, telle qu'un disque ou un triangle (non représentées).

Un déflecteur 2 symétrique en position de repos permet d'éviter d'avoir à tenir compte d'un sens pour l'agencement du déflecteur 2 sur le véhicule puisque le flux d'air incident déformera le déflecteur 2 pareillement dans les deux sens. On simplifie ainsi les lignes de montage car le déflecteur 2 symétrique peut être positionné dans un sens ou dans l'autre. Egalement, un même déflecteur 2 symétrique peut être utilisé côté conducteur et côté passager pour les systèmes d'essuyage papillon. On réduit ainsi de manière importante le nombre de références.

A l'arrêt du véhicule, le déflecteur 2 présente une forme symétrique (figure 2).

Puis, lorsque le véhicule se déplace, le vent relatif qui est produit par le déplacement du véhicule (schématisé par une flèche sur la figure 3) déforme les demi-ailerons 2a, 2b du déflecteur 2. Une extrémité d'un demi-aileron 2b s'incline vers l'autre demi-aileron 2a, qui s'incline dans le même sens du flux d'air incident. La surface d'appui du déflecteur 2 déviant l'air incident (ou surface de déflexion) est alors formée d'une part, par le dos S1 d'un demi-aileron 2a et d'autre part, par une portion de face interne S2 de l'autre demi-aileron 2b alors découverte. La surface de déflexion S1, S2 en position déformée peut par exemple être au moins augmentée de 5% relativement à la surface de déflexion S1 en position de repos.

Le sommet 7 du déflecteur 2 déformé s'inscrit ainsi dans une forme aérodynamique asymétrique dans laquelle la surface d'appui déviant l'air incident lors du déplacement du véhicule est augmentée (figure 3) par rapport à la surface d'appui de l'air incident du déflecteur en position de repos (figure 2). L'augmentation relative de la surface de déflexion du déflecteur 2 permet d'améliorer sensiblement le plaquage du balai 1 sur le panneau vitré et donc l'efficacité du déflecteur 2.

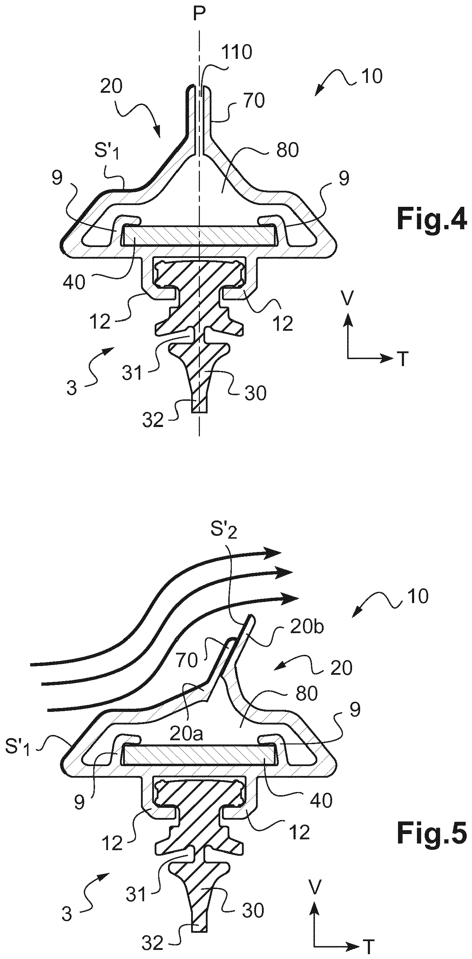

Les figures 4 et 5 représentent un deuxième mode de réalisation du balai d'essuie-glace 10 du type "flat blade".

Le balai d'essuie-glace 10 comporte un déflecteur 20, une lame d'essuyage 30 et une unique vertèbre de rigidification 40.

Le déflecteur 20 et la lame d'essuyage 30 sont formés de deux éléments distincts.

Le déflecteur 20 comporte en outre un élément de fixation configuré pour fixer le déflecteur 20 à une lame d'essuyage 30 ou à au moins une vertèbre de rigidification 4 ; 40, tel qu'un élément de fixation par collage, par clippage ou par montage en force.

L'élément de fixation comporte par exemple deux premiers crochets 9 supérieurs agencés en vis-à-vis pour recevoir la vertèbre de rigidification 40.

L'élément de fixation comporte par exemple deux deuxièmes crochets 12 inférieurs, agencés en vis-à-vis pour recevoir un dos de la lame d'essuyage 30. Les deux premiers crochets 9 surmontent ainsi les deux deuxièmes crochets 12.

Le déflecteur 20 est fendu longitudinalement, la fente 110 communiquant avec une cavité longitudinale 80 du déflecteur 20 de manière à former deux demi-ailerons 20a, 20b pouvant prendre une position de repos (figure 4) et une position déformée (figure 5) dans laquelle les demi-ailerons 20a, 20b déformés augmentent la surface de déflexion du déflecteur 20.

Le déflecteur 20 est fendu à son sommet 70, selon le plan de symétrie longitudinale P en position de repos, ouvrant une cavité longitudinale 80 du déflecteur 2 (figure 4).

Dans ce mode de réalisation, en position de repos (figure 4), le sommet 70 fendu du déflecteur 20 s'étend par une pointe verticale. Les demi-ailerons 20a, 20b présentent une épaisseur transversale plus étroite que la base du déflecteur 2 de sorte qu'ils peuvent se déformer plus facilement sous l'effet de la force du flux d'air incident que la base du déflecteur 20 plus épaisse.

Ainsi, à l'arrêt du véhicule, le déflecteur 20 présente un sommet 70 symétrique (figure 4).

Puis, lorsque le véhicule se déplace, le vent relatif qui est produit par le déplacement du véhicule (schématisé par des flèches sur la figure 5), déforme les demi-ailerons 20a, 20b du déflecteur 20. Les demi-ailerons 20a, 20b s'inclinent alors par déformation élastique, les faces internes de la pointe verticale du sommet 70 se décalant l'une par rapport à l'autre en inclinant le déflecteur 20 sur un côté.

En position déformée, une extrémité d'un demi-aileron 20a appuie sur l'autre demi-aileron 20b. La surface déviant l'air est alors formée par le dos S1' d'un demi-aileron 20a ainsi qu'une portion de face interne S2' de l'autre demi-aileron 20b alors apparente. Le sommet 70 du déflecteur 20 déformé s'inscrit ainsi dans une forme aérodynamique asymétrique dans laquelle la surface déviant l'air est augmentée (figure 5). La surface de déflexion S1', S2' en position déformée peut par exemple être au moins augmentée de 5% relativement à la surface de déflexion S1' en position de repos.

Bien que les deux modes de réalisation décrits concernent un déflecteur 2 ; 20 symétrique en position de repos, l'invention concerne également un déflecteur asymétrique fendu longitudinalement, la fente communiquant avec une cavité longitudinale du déflecteur de manière à former deux demi-ailerons pouvant prendre une position déformée dans laquelle les demi-ailerons déformés augmentent la surface de déflexion du déflecteur (non représenté).

## Revendications

1. Déflecteur (2 ; 20) pour balai d'essuie-glace (1 ; 10) de véhicule automobile, en matériau souple **caractérisé en ce qu'**il est fendu longitudinalement par une fente (11 ; 110) communiquant avec une cavité longitudinale (8 ; 80) du déflecteur (2 ; 20) de manière à former deux demi-ailerons (2a, 2b ; 20a, 20b) pouvant prendre une position déformée dans laquelle les demi-ailerons (2a, 2b ; 20a, 20b) déformés augmentent la surface de déflexion (S1, S2 ; S1', S2') du déflecteur (2 ; 20).

2. Déflecteur (2 ; 20) selon la revendication précédente, **caractérisé en ce que** la surface de déflexion (S1, S2 ; S1', S2') en position déformée est au moins augmentée de 5%.

3. Déflecteur (2 ; 20) selon l'une des revendications précédentes, **caractérisé en ce que** les demi-ailerons (2a, 2b ; 20a, 20b) peuvent prendre une position de repos dans laquelle ils se font face de manière symétrique.

4. Déflecteur (2) selon la revendication précédente, **caractérisé en ce qu'**en position de repos, la section transversale de la cavité longitudinale (8) présente une forme de gouttelette.

5. Déflecteur (2) selon l'une des revendications 3 ou 4, **caractérisé en ce qu'**en position de repos, le sommet (7) du déflecteur (2) s'inscrit dans un triangle isocèle.

6. Déflecteur (20) selon l'une des revendications précédentes, **caractérisé en ce qu'**en position de repos, le sommet (70) du déflecteur (20) s'étend par une pointe verticale.

7. Déflecteur (20) selon l'une des revendications précédentes, **caractérisé en ce qu'**en position déformée, une extrémité d'un demi-aileron (20a) appuie sur l'autre demi-aileron (20b).

8. Déflecteur (20) selon l'une des revendications précédentes, **caractérisé en ce qu'**il comporte un élément de fixation (9, 10) pour fixer le déflecteur (20) à une lame d'essuyage (30) ou à au moins une vertèbre de rigidification (4 ; 40).

9. Déflecteur (2) selon l'une des revendications précédentes, **caractérisé en ce qu'**il est formé d'une seule pièce avec une lame d'essuyage (3) de balai d'essuie-glace (1).

10. Déflecteur (2 ; 20) selon l'une des revendications précédentes, **caractérisé en ce qu'**il est obtenu par moulage ou extrusion d'un ou de plusieurs matériaux.

11. Balai d'essuie-glace (1 ; 10) **caractérisé en ce qu'**il comporte un déflecteur (2 ; 20) selon l'une des revendications précédentes.

## Patentansprüche

1. Deflektor (2; 20) für Scheibenwischer (1; 10) eines Kraftfahrzeugs aus weichem Material, **dadurch gekennzeichnet, dass** er durch einen Spalt (11; 110) longitudinal geschlitzt ist, welcher mit einem longitudinalen Hohlraum (8; 80) des Deflektors (2; 20) kommuniziert, um zwei Halbflügel (2a, 2b; 20a, 20b) zu bilden, welche eine verformte Position einnehmen können, in welcher die verformten Halbflügel (2a, 2b; 20a, 20b) die Ablenkfläche (S1, S2; S1', S2') des Deflektors (2; 20) vergrößern.

2. Deflektor (2; 20) nach dem vorhergehenden Anspruch, **dadurch gekennzeichnet, dass** die Ablenkfläche (S1, S2; Sl', S2') in verformter Position zumindest um 5 % erhöht wird.

3. Deflektor (2; 20) nach einem der vorhergehenden Ansprüche, **dadurch gekennzeichnet, dass** die Halbflügel (2a, 2b; 20a, 20b) eine Ruhestellung einnehmen können, in welcher sie sich symmetrisch gegenüber stehen.

4. Deflektor (2) nach dem vorhergehenden Anspruch, **dadurch gekennzeichnet, dass** der Querschnitt des longitudinalen Hohlraums (8) in der Ruhestellung eine Tröpfchenform aufweist.

5. Deflektor (2) nach einem der Ansprüche 3 oder 4, **dadurch gekennzeichnet, dass** der Scheitel (7) des Deflektors (2) in der Ruhestellung Teil eines gleichschenkligen Dreiecks ist.

6. Deflektor (20) nach einem der vorhergehenden Ansprüche, **dadurch gekennzeichnet, dass** sich der Scheitel (70) des Deflektors (20) in der Ruhestellung durch eine vertikale Spitze ausdehnt.

7. Deflektor (20) nach einem der vorhergehenden Ansprüche, **dadurch gekennzeichnet, dass** ein Ende eines Halbflügels (20a) in der verformten Position auf den anderen Halbflügel (20b) drückt.

8. Deflektor (20) nach einem der vorhergehenden Ansprüche, **dadurch gekennzeichnet, dass** er ein Befestigungselement (9, 10) umfasst, um den Deflektor (20) an einem Wischerblatt (30) oder an mindestens einer Versteifungsleiste (4; 40) zu befestigen.

9. Deflektor (2) nach einem der vorhergehenden Ansprüche, **dadurch gekennzeichnet, dass** er aus einem Stück mit einem Wischerblatt (3) des Scheibenwischers (1) ausgebildet ist.

10. Deflektor (2; 20) nach einem der vorhergehenden Ansprüche, **dadurch gekennzeichnet, dass** er durch Abformen oder Extrudieren eines oder mehrerer Materialien erzielt wird.

11. Scheibenwischer (1; 10), **dadurch gekennzeichnet, dass** er einen Deflektor (2; 20) nach einem der vorhergehenden Ansprüche umfasst.

## Claims

1. Spoiler (2; 20) for a wiper blade (1; 10) of a motor vehicle made of flexible material, **characterised in that** it is split longitudinally by a slot (11; 110) which communicates with a longitudinal cavity (8; 80) in the spoiler (2; 20), such as to form two half-fins (2a, 2b; 20a, 20b) which can adopt a deformed position in which the deformed half-fins (2a, 2b; 20a, 20b) increase the deflection surface (S1, S2; S1', S2') of the spoiler (2; 20).

2. Spoiler (2; 20) according to the preceding claim, **characterised in that** the deflection surface (S1, S2; S1' S2') in the deformed position is increased by at least 5%.

3. Spoiler (2; 20) according to one of the preceding claims, **characterised in that** the half-fins (2a, 2b; 20a, 20b) can adopt a position of rest in which they face one another symmetrically.

4. Spoiler (2) according to the preceding claim, **characterised in that**, in the position of rest, the transverse cross-section of the longitudinal cavity (8) has the form of a droplet.

5. Spoiler (2) according to one of claims 3 or 4, **characterised in that**, in the position of rest, the top (7) of the spoiler (2) is inscribed in an isosceles triangle.

6. Spoiler (20) according to one of the preceding claims, **characterised in that**, in the position of rest, the top (70) of the spoiler (20) is extended by a vertical tip.

7. Spoiler (20) according to one of the preceding claims, **characterised in that**, in the deformed position, an end of one half-fin (20a) is supported on the other half-fin (20b).

8. Spoiler (20) according to one of the preceding claims, **characterised in that** it comprises a securing element (9, 10) for securing the spoiler (20) on a blade (30) or on at least one spline (4; 40).

9. Spoiler (2) according to one of the preceding claims, **characterised in that** it is formed integrally with a blade (3) of a wiper blade (1).

10. Spoiler (2; 20) according to one of the preceding claims, **characterised in that** it is obtained by moulding or extrusion of one or more materials.

11. Wiper blade (1; 10), **characterised in that** it comprises a spoiler (2; 20) according to one of the preceding claims.
